# EUROPÄISCHE PATENTSCHRIFT

(11) **EP 2 335 954 B1**
(45) Veröffentlichungstag und Bekanntmachung des Hinweises auf die Patenterteilung: **20.05.2015**
(21) Anmeldenummer: 10090013.3
(22) Anmeldetag: 16.12.2010
(51) Int. Cl.: B60H 1/00, B61D 27/00

(54) **Anordnung zur Befestigung an einer Wagenkasten-Decke eines Großraum-Fahrzeuges zur Personenbeförderung**
Assembly for fixing to a ceiling of a vehicle transporting large number of passengers
Agencement destiné à la fixation sur le plafond d'un véhicule de type monospace pour le transport de personnes

(30) Priorität: 18.12.2009 DE 102009059091
(43) Veröffentlichungstag der Anmeldung: 22.06.2011
(73) Patentinhaber: Bombardier Transportation GmbH, 10785 Berlin (DE)
(72) Erfinder: Friedrich, Johann, 1210 Wien (AT)
(74) Vertreter: Patentanwälte Bressel und Partner mbB

(56) Entgegenhaltungen:
- EP-A1- 0 678 408
- DE-A1- 3 430 129
- DE-A1- 4 302 990
- DE-A1- 4 404 292
- DE-A1- 19 641 642
- DE-C1- 4 300 713
- DE-C1- 19 654 633
- US-A- 2 585 666
- US-B1- 6 416 116

## Beschreibung

Die Erfindung betrifft eine Anordnung zur Befestigung an einer Wagenkasten-Decke eines Großraum-Fahrzeuges zur Personenbeförderung. Bei dem Fahrzeug handelt es sich insbesondere um ein Schienenfahrzeug, zum Beispiel eine Straßenbahn, oder um einen Regionalzug. Unter Personenbeförderung wird insbesondere die Beförderung von Personen im so genannten öffentlichen Personenverkehr verstanden. Der Begriff "Großraum" bezieht sich insbesondere auf Fahrgasträume für mehr als zehn Personen. Typischerweise weisen Großraum-Schienenfahrzeuge Fahrgasträume mit Sitzplätzen für mehr als zwanzig Personen auf, zum Beispiel für fünfzig Personen.

Aus US 6,416,116 B1 ist ein Fahrzeug für den öffentlichen Verkehr bekannt, wobei in Längsrichtung des Fahrzeuges unterhalb der Decke zwei Schienen zur Befestigung von Haltestangen angeordnet sind. Zwischen den Schienen ist ein zentrales Deckenpanel vorgesehen, zwischen dem und dem Dach eine Luftzuführung definiert ist, die sich in Längsrichtung entlang dem Gang über den Passagieren erstreckt. Die Luftzuführung wird durch ein auf dem Dach montiertes System mit Luft versorgt.

Diese Deckenverkleidung beinhaltet zwar einen Zuluftkanal und besteht aus wenigen Teilen, die Belüftung des Fahrgastraumes ist jedoch lediglich über die Verteilung und Größe der Luftaustrittsöffnungen einstellbar. Insbesondere kann es zu hohen Luftgeschwindigkeiten und Verwirbelungen an den Luftaustrittsöffnungen zum Fahrgastraum kommen. Außerdem müssen Anschlüsse der Luftzuführung an eine Gebläseeinheit und benachbarte Fahrzeugteile mit ebenfalls einem Zuluftkanal speziell ausgestaltet werden. Zum Beispiel werden Übergangsstücke benötigt, die individuell auf die Abmessungen des Fahrzeugs anzupassen sind. US 6,416,116 B1 beschreibt lediglich den Anschluss des Zuluftkanals an eine Gebläseeinheit, nicht aber an weitere Fahrzeugteile, da es sich um eine Anordnung für einen Autobus handelt.

DE 43 00 713 C1, die den Oberbegriff des Anspruchs 1 bildet, beschreibt eine Befestigungsanordnung für einen Deckehkanat eines Belüftungssystems eines Fahrzeugs, insbesondere eines Schienenfahrzeugs zur Personenbeförderung, welcher Deckenkanal aus tunnelförmigen Kanalelementen zusammengesetzt ist, die oberhalb einer Fahrzeuginnendecke mit den Rändern ihrer Schenkel beidseits auf von einem Fahrzeugdach abgehängten, längslaufenden Profilträgern aufgelegt sind, die ihrerseits wenigstens ein Stützelement zur seitlichen Abstützung der Einzelelemente aufweisen. Das Stützelement jedes Profilträgers befindet sich auf der Innenseite des Deckenkanals und liegt an der Innenseite des Randes der Kanalelemente an. Die Profilträger sind an ihren Längsseiten an außerhalb des Deckenkanals vorgesehenen Hängeschenkeln befestigt, die ihrerseits an der Außenseite des Randes der Kanalelemente angelegt sind.

DE 196 41 642 A1 offenbart ein auf einem Fahrzeugdach montiertes Klimagerät, das eine einheitliche Basis aus einem Kunststoffmaterial und einen Boden besitzt, der direkt am Dach des Fahrzeuges befestigt werden kann. Die Basis und eine Abdeckung können aus einem Kunstharz, vorzugsweise einem glasfaserverstärkten Duroplast, einstückig geformt sein.

DE 44 04 292 A1 beschreibt ein Verteilerelement für einen Wagen für den Personenverkehr. Das Verteilerelement kann aus Kunststoff;vorzugsweise glasfaserverstärktem Kunststoff, bestehen. Das Verteilerelement kann mit einem Hochdrucklaminat beschichtet sein.

Es ist eine Aufgabe der vorliegenden Erfindung, eine Anordnung zur Befestigung an einer Wagenkasten-Decke eines Großraum-Fahrzeuges zur Personenbeförderung anzugeben, die für eine Vielzahl von Fahrzeugtypen geeignet ist und dabei in möglichst einfacher Form an standardisierte Belüftungseinrichtungen und/oder angrenzende-Fahrzeugteile ankoppelbar ist. Die Anordnung soll aus leichten, dennoch formstabilen und kostengünstig herstellbaren Teifen zusammengesetzt sein, die so gestaltet werden können, dass sie bei einem Brand eine geringe Wärmefreisetzungsrate haben. Eine weitere Aufgabe der Erfindung ist es, ein Verfahren zum Herstellen einer derartigen Anordnung anzugeben. Ferner betrifft die Erfindung ein Großraum-Fahrzeug zur Personenbeförderung mit einer derartigen Anordnung.

Die beigefügten Patentansprüche definieren den Schutzumfang.

Es wird vorgeschlagen, die Deckenverkleidung zur Verkleidung der Wagenkasten-Decke des Fahrzeuges als zumindest zweiteilige Standardkonstruktion auszugestalten, die unverändert in den verschiedenen Fahrzeugtypen eingesetzt werden kann. Daher weist die Deckenverkleidung ein Kanalmodul auf, das einen in Längsrichtung des Wagenkastens verlaufenden Zuluftkanal für eine Zuführung von Luft in das Innere des Wagenkastens bildet. Im Gegensatz zu der Deckenverkleidung in der US 6,416,116 B1 ist somit ein zusätzliches Modul vorgesehen, welches den Zuluftkanal definiert, insbesondere zumindest die seitlichen Wände und vorzugsweise auch die obere Begrenzung des Zuluftkanals zur Fahrzeugdecke aufweist. Ein Vorteil eines zusätzlichen Kanalmoduls besteht darin, dass die Anschlüsse zu einem Belüftungsaggregat und optional zu weiteren Kanalmodulen in angrenzenden Fahrzeugteilen oder Fahrzeugen vorgefertigt werden können. Das Kanalmodul muss lediglich an der Wagenkasten-Decke befestigt werden. Das Kanalmodul ist daher insbesondere für solche Fahrzeuge geeignet, die mehrere Fahrzeugbereiche (z.B. durch Drehgestellte und/oder Übergangsbereiche zwischen den Fahrzeugbereichen getrennte Fahrzeugbereiche) aufweisen.

Ferner weist die Deckenverkleidung ein plattenförmiges Deckelement auf, das den Zuluftkanal unten abdeckt und auf seiner Unterseite eine vom Fahrgastraum sichtbare Oberfläche der Deckenverkleidung bildet, wobei das Deckelement von dem Kanalmodul abnehmbar ist. Dies ermöglicht eine Reinigung und Wartung des Zuluftkanals.

Ein weiterer Vorteil eines zusätzlichen Kanalmoduls besteht darin, dass die Materialien speziell auf die Anforderungen von Luftzuführungen in Fahrgasträumen angepasst werden können. Insbesondere können die Materialien so gewählt werden, dass sie den Brandschutzbestimmungen genügen. Hierauf wird noch näher eingegangen. Außerdem können die Wände des Zuluftkanals auf geringen Widerstand und einfache Reinigung optimiert werden. Zum Beispiel können die Oberflächen der Kanalwände so ausgestaltet werden, dass sie Schmutzpartikeln keine Angriffsflächen oder Ablagerungsflächen bieten, an denen diese haften bleiben können, HPL-Materialien (siehe unten) sind hierfür gut geeignet.

Das Deckelement ist vorzugsweise selbst tragend ausgestaltet, so dass es zum Beispiel an gegenüberliegenden seitlichen Endbereichen befestigt werden kann, ohne unter dem eigenen Gewicht seine Form zu verändern.

In bevorzugter Ausgestaltung untergliedert sich die Deckenverkleidung in das Kanalmodul, welches (in Richtung der Breite des Fahrzeugs) im zentralen Bereich unter der Wagenkasten-Decke montiert wird und in Voutenelemente, die seitlich, am Übergangsbereich zwischen der Wagenkasten-Decke und der Wagenkasten-Seitenwand seitlich des Kanalmoduls angeordnet werden. Die Voutenelemente dienen ebenfalls der Abdeckung bzw. Verkleidung der Innenseite des Wagenkastens. Sie können vorzugsweise geöffnet werden und/oder sind abnehmbar. Ferner kann die Deckenverkleidung im Bereich von Türen in dem Wagenkasten spezielle Elemente aufweisen, die an die Form der Türeinrichtungen, insbesondere an die so genannten Türschutzkästen angepasst ist. Der zentrale Teil mit dem Kanalmodul und dem Deckelement kann aber bei den verschiedenen Fahrzeugtypen gleich ausgeführt sein. Die Anpassung an die Breite, die bei verschiedenen Fahrzeugtypen variieren kann, sowie optional an die Fahrzeugtyp-abhängigen Einrichtungen wie Tür und dergleichen, findet im seitlichen Deckenbereich mit den Voutenelementen und optionalen anderen speziell angepassten Elementen statt.

Zu der Anordnung gehört ferner eine tragende Konstruktion, die Teil der Wagenkasten-Decke ist oder an der Wagenkasten-Decke befestigt ist. An der tragenden Konstruktion ist die Deckenverkleidung, insbesondere das Kanalmodul, aufgehängt. Vorzugsweise erstreckt sich zumindest ein Teil der tragenden Konstruktion seitlich des Kanalmoduls, d.h. im Höhenbereich des Zuluftkanals seitlich des Kanals, und weist Befestigungseinrichtungen zum Befestigen von weiteren Bauteilen des Fahrzeugs auf. Auf solche weiteren Bauteile wird noch näher eingegangen. Dazu gehören insbesondere Haltestangen und Haltegriffe, an denen sich Passagiere im Fahrgastraum festhalten können, Leuchten und/oder Konsolen, Gepäcknetze und dergleichen Einrichtungen für die Ablage von Gepäck.

In spezieller Ausgestaltung weist die tragende Konstruktion zwei in Längsrichtung des Fahrzeugs verlaufende Befestigungsprofile auf, die seitlich, auf gegenüberliegenden Seiten des Kanalmoduls an der Wagenkasten-Decke befestigt sind. Entweder direkt oder indirekt über weitere Teile der tragenden Konstruktion ist das Kanalmodul in diesem Fall mit den Befestigungsprofilen verbunden.

Ein wesentlicher Vorteil der Erfindung ist, dass einerseits wenige verschiedene Bauteile für die Deckenverkleidung verwendet werden und andererseits der zentrale Teil, nämlich das Kanalmodul mit Deckplatte, sogar für die verschiedenen Fahrzeugtypen in gleicher Weise, insbesondere mit gleicher Breite und vorzugsweise auch mit gleicher Länge in Längsrichtung des Fahrzeugs, eingesetzt werden kann.

Vorzugsweise ist in dem Kanalmodul seitlich des Zuluftkanals zumindest ein sich in der Längsrichtung des Wagenkastens erstreckender Beruhigungsraum ausgestaltet, der eintrittsseitig mit dem Zuluftkanal und Austrittsseitig über Austrittsöffnungen mit dem Fahrgastraum verbunden ist, so dass Luft aus dem Zuluftkanal durch den Beruhigungsraum und durch die Austrittsöffnungen in den Fahrgastraum strömen kann. Vorzugsweise tritt die Luft beim Übergang von dem Zuluftkanal in den Beruhigungsraum durch einen Übergangsbereich mit einem verringerten Strömungsquerschnitt hindurch, wobei die Querschnittsfläche des Übergangsbereichs kleiner ist als die Querschnittsfläche in dem Beruhigungsraum. Daher verringern sich die Luftgeschwindigkeiten nach dem Eintritt in den Beruhigungsraum, es kann eine Verteilung der Luft stattfinden und die Luft tritt gleichmäßig über die verschiedenen Austrittsöffnungen verteilt bei geringen Luftgeschwindigkeiten in den Fahrgastraum ein. Vorzugsweise befinden sich zwei Beruhigungsräume seitlich des Zuluftkanals, auf gegenüberliegenden Seiten des Zuluftkanals.

Es ist ein Vorteil der Ausführungsform mit zumindest einem Beruhigungsraum, dass eine solche Gestaltung mit Zuluftkanal und Beruhigungsraum durch ein einziges, einstückiges Kanalmodul realisierbar ist. Es müssen daher nicht verschiedene Einzelteile innerhalb des Wagenkastens an der Decke befestigt werden. Das Kanalmodul kann vorgefertigt werden und mit Zuluftkanal und Beruhigungsraum an der Wagenkasten-Decke befestigt werden. Optional kann das Deckelement sowohl den Zugluftkanal als auch den oder die Beruhigungsräume unten abdecken.

Eine der oben erwähnten Befestigungseinrichtungen der tragenden Konstruktion dient vorzugsweise zur Befestigung von Haltestangen und/oder Haltegriffen, an denen sich Fahrgäste innerhalb des Fahrgastraums festhalten können. Insbesondere, wenn sich die Befestigungseinrichtung seitlich des Kanalmoduls befindet, können die Haltestangen und/oder Haltegriffe mit einem tragenden Teil an der Befestigungseinrichtung befestigt werden, zum Beispiel festgeschraubt werden. Eine solche Befestigung kann besonders stabil ausgeführt werden und ist vorzugsweise so stabil, dass eine Haltestange nicht zum Boden des Wagenkastens reichen muss, um einen stabilen Halt zu geben. In besonderer Ausgestaltung ist die Befestigungseinrichtung unten durch eine Blende abgedeckt, die eine Durchtrittsöffnung für das tragende Teil der Haltestange und/oder Haltegriff aufweist. Auf diese Weise kann der Befestigungsbereich, wo sich der Übergang zwischen dem tragenden Teil und der Befestigungseinrichtung befindet, abgedeckt sein, so dass er von dem Fahrgastraum nicht sichtbar ist.

Vorzugsweise weist die Befestigungseinrichtung zur Befestigung von Haltestangen und/oder Haltegriffen ein nach unten offenes C-förmiges Profil auf, das sich in Längsrichtung des Fahrzeugs erstreckt. Das Ende des tragenden Teils der Haltestange und/oder des Haltegriffs erstreckt sich in das C-Profil hinein und kann in frei wählbarer Position in Längsrichtung des Fahrzeuges positioniert und fixiert werden.

In vorteilhafter Ausgestaltung weist die Deckenverkleidung ein langgestrecktes Profil auf, das sich seitlich des Kanalmoduls in Längsrichtung des Fahrzeugs erstreckt. In dem langgestreckten Profil sind die Austrittsöffnungen ausgeformt, durch die die Zuluft aus dem Zuluftkanal in den Fahrgastraum ausströmt.

Insbesondere kann das Deckelement fest mit dem langgestreckten Profil verbunden sein, zum Beispiel verklebt sein. Ferner vorzugsweise wird das Deckelement über das langgestreckte Profil lösbar mit der tragenden Konstruktion verbunden, so dass das Deckelement gemeinsam mit dem langgestreckten Profil von dem Kanalmodul abnehmbar ist. In besonderer Ausgestaltung befinden sich zwei langgestreckte Profile an den gegenüberliegenden Seiten des Deckelements und sind mit der tragenden Konstruktion lösbar verbunden. Bei den langgestreckten Profilen kann es sich insbesondere um Metallprofile, zum Beispiel Aluminium-Strangpressprofile, handeln, die vorzugsweise Leitflächen zum Leiten der ausströmenden Luft in erwünschte Richtungen aufweisen.

Vorzugsweise weist das Kanalmodul zusätzlich zu dem Zuluftkanal zumindest einen Abluftkanal auf, durch den Abluft aus dem Fahrgastraum abgeleitet werden kann. Der Abluftkanal ist zum Beispiel, falls vorhanden, oberhalb des Beruhigungsraumes angeordnet. Der Abluftkanal ist in spezieller Ausgestaltung, anders als der Zuluftkanal, nicht durch Abnehmen einer Kanalwand zu öffnen, sondern das Kanalmodul weist vorzugsweise einen geschlossenen umlaufenden Rand mit Kanalwänden zum Beispiel an allen vier Seiten des Abluftkanals auf. Die Zuleitung der Abluft aus dem Fahrgastraum in den Abluftkanal kann zum Beispiel durch Lufteintrittsöffnungen im Bereich des Fußbodens des Fahrgastraumes und durch Kanäle im Bereich der Seiten des Wagenkastens, insbesondere entlang der Türsäulen, und/oder im Bereich des Wagenkasten-Endes realisiert werden. Vorzugsweise sind zwei Abluftkanäle auf gegenüberliegenden Seiten des Zuluftkanals in dem Kanalmodul ausgebildet, wobei die Längsachsen der Abluftkanäle und des Zuluftkanals parallel zueinander verlaufen. Im Falle nur eines einzigen Abluftkanals gilt dies auch für die Längsachsen des nur einen Abluftkanals und des Zuluftkanals.

Das Kanalmodul und/oder das Deckelement ist jeweils aus zumindest einem Formteil mit faserverstärkten und geschäumten Duroplasten gefertigt. Dabei kann es sich insbesondere um glasfaserverstärkten Phenolharzschaum handeln, der zum Beispiel plattenförmig mit einer Wandstärke im Bereich von 6 - 10 mm verwendet wird.

Das Deckelement und optional auch andere Formteile des Kanalmoduls, weist/weisen eine Deckschicht aus unter Hochdruck laminierten Verbundmaterialien (HPL) auf. Bei dem Deckelement handelt es sich dabei insbesondere um die untere Deckschicht, die die Ansichtsfläche für den Fahrgastraum bildet. Es kann aber auch die obere Deckschicht des Deckelements aus dem gleichen Material bestehen. Insbesondere kann es sich bei dem unter Hochdruck laminierten Verbundmaterial um Papierbahnen handeln, die mit härtbaren (duroplastischen) Kunstharzen getränkt worden sind. Die äußerste Schicht, die als Dekorschicht bezeichnet werden kann, besteht vorzugsweise aus einem in der gewünschten Farbe eingefärbten oder bedruckten und melaminharzgetränkten Bogenpapier. Die Kernschichten des Laminats bestehen z.B. aus Papierbogen, die mit Phenolharz getränkt worden sind. Unter hohem Druck, bei gleichzeitiger Wärmeeinwirkung werden die verschiedenen Schichten unlösbar miteinander verpresst und härten zu einem festen, nicht mehr erweichbaren Plattenkörper aus. Im Ergebnis werden Kunststoffplatten von homogener Härte und hoher Festigkeit mit porenlosen Oberflächen erhalten. Die Dicke der laminierten Deckschichten kann zum Beispiel im Bereich von 0,6 - 1,2 mm liegen.

Insbesondere können die Formteile des Kanalmoduls und/oder des Deckelements plattenförmiges Sandwich-Material aufweisen, wobei die gegenüberliegenden äußeren Schichten durch das beschriebene Laminat gebildet werden, das auf einen Kern aus dem oben erwähnten faserverstärkten und geschäumten Duroplastmaterial aufgeklebt ist.

Bei den Fasermaterialien kann es sich insbesondere um Fasermaterialien aus der folgenden Gruppe von Materialien handeln: Glasfasern, mesoskalige Karbonfasern, nanoskalige zylindrische Grafitfasern und beliebige Kombinationen davon.

Ferner wird bevorzugt, dass die Deckschicht einen MAHRE (Maximum Average Rate of Heat Emission), gemessen im Kegelkalorimeter (engl.: cone calorimeter) von weniger al 90 kW/m², vorzugsweise weniger als 65 kW/m² aufweist. Den MAHRE-Wert erhält man bei einer Brandschutzuntersuchung entsprechend der internationalen Norm ISO 5660-1. Dabei wird die Wärmefreisetzungsrate von horizontal angeordneten Proben bei der Entzündung durch eine externe Wärmequelle ermittelt. Überraschenderweise hat sich herausgestellt, dass das oben erwähnte Material für die Deckschicht bereits ohne weiteren Zusatz von Feuer hemmenden Materialien den Grenzwert von 90 kW/m² für Schienenfahrzeuge einhält, die nicht durch Tunnel fahren.

Bei den faserverstärkten und geschäumten Duroplasten, die für die Formteile des Kanalmoduls und/oder des Deckelements insbesondere als Kernmaterial eingesetzt werden, wird bevorzugt, dass das Material einen MAHRE von kleiner als 15 kW/m² aufweist. Dies ist zum Beispiel bei glasfaserverstärktem Phenolharzschaum der Fall, wenn die Wandstärke zwischen 6 und 10 mm liegt.

Es wird bevorzugt, dass das Kanalmodul ausschließlich aus den oben beschriebenen Wandelementen und optional Verbindungsteilen zum Verbinden der Wandelemente zur Ausformung der Kanäle besteht. Daher können die Grenzwerte bezüglich des Brandschutzes in einfacher Weise eingehalten werden.

Ferner betrifft die Erfindung ein Verfahren zur Herstellung einer Anordnung zur Befestigung an einer Wagenkasten-Decke eines Großraum-Fahrzeuges zur Personenbeförderung, insbesondere eines Schienenfahrzeuges, nach Anspruch 15.

Ausgestaltungen des Verfahrens betreffen die speziellen Ausführungsformen und Varianten der Anordnung, die in dieser Beschreibung beschrieben sind.

Das abnehmbar befestigte Deckelement hat außerdem den Vorteil, dass die nach unten weisende Oberfläche, die aus dem Passagierraum erkennbar ist, hinsichtlich Dekor, Struktur und Farbton frei gestaltet werden kann. Insbesondere ist sie auswechselbar gegen eine anders aussehende, gleich große Platte. Alle anderen Teile, insbesondere das Kanalmodul, können jedoch unabhängig vom Fahrzeugtyp und unabhängig von den Wünschen des Fahrzeug-Betreibers immer in gleicher Weise ausgestaltet sein.

Ausführungsbeispiele der Erfindung werden nun unter Bezugnahme auf die beigefügte Zeichnung beschrieben. Die einzelnen Figuren der Zeichnung zeigen:
- Fig. 1: eine perspektivische Darstellung mit Blick von der Unterseite auf eine Anordnung zur Befestigung an einer Wagenkasten-Decke eines Großraum-Fahrzeugs zur Personenbeförderung,
- Fig. 2: eine dreidimensionale Darstellung der Anordnung aus Fig. 1 von oben,
- Fig. 3: die Anordnung aus Fig. 1 und Fig. 2 in dreidimensionaler Darstellung von rechts unten gesehen,
- Fig. 4: einen Querschnitt durch die Anordnung aus Fig. 1 und Fig. 3 im hinteren Bereich der Anordnung,
- Fig. 5: ein Kanalmodul, ein Deckelement und ein Teil der tragenden Konstruktion in einer Querschnittsdarstellung der Anordnung aus Fig. 1 bis Fig. 4,
- Fig. 6: eine vergrößerte Darstellung des rechten Teils in Fig. 5,
- Fig. 7: das Kanalmodul der Anordnung von Fig. 1 bis Fig. 6 in einer Querschnittsdarstellung,
- Fig. 8: ein Detail der Darstellung in Fig. 7, nämlich des durch einen Kreis mit dem Bezugszeichen VIII umrandeten Bereichs in Fig. 7,
- Fig. 9: ein weiteres Detail aus Fig. 7, nämlich der Bereich, der mit dem mit IX bezeichneten Kreis in Fig. 7 umrandet ist,
- Fig. 10: einen Querschnitt durch das Deckelement und die an gegenüberliegenden Seitenrändern des Deckelements mit diesen verbundenen Luftleitprofilen und
- Fig. 11: in vergrößerter Darstellung der links in Fig. 10 dargestellte Bereich mit dem linken Seitenrand des Deckelements und dem linken Luftleitprofil.

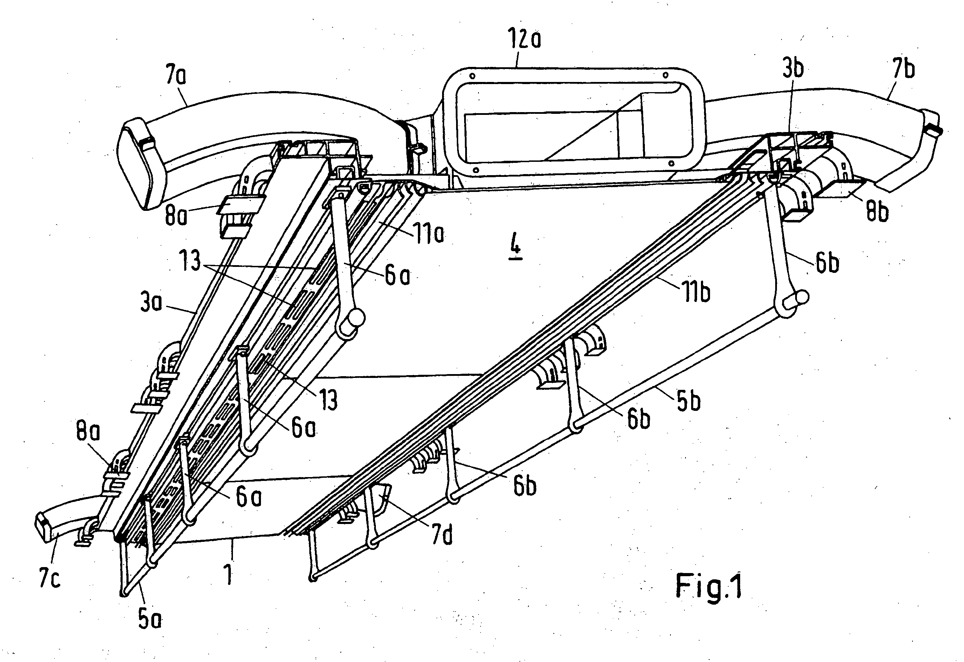

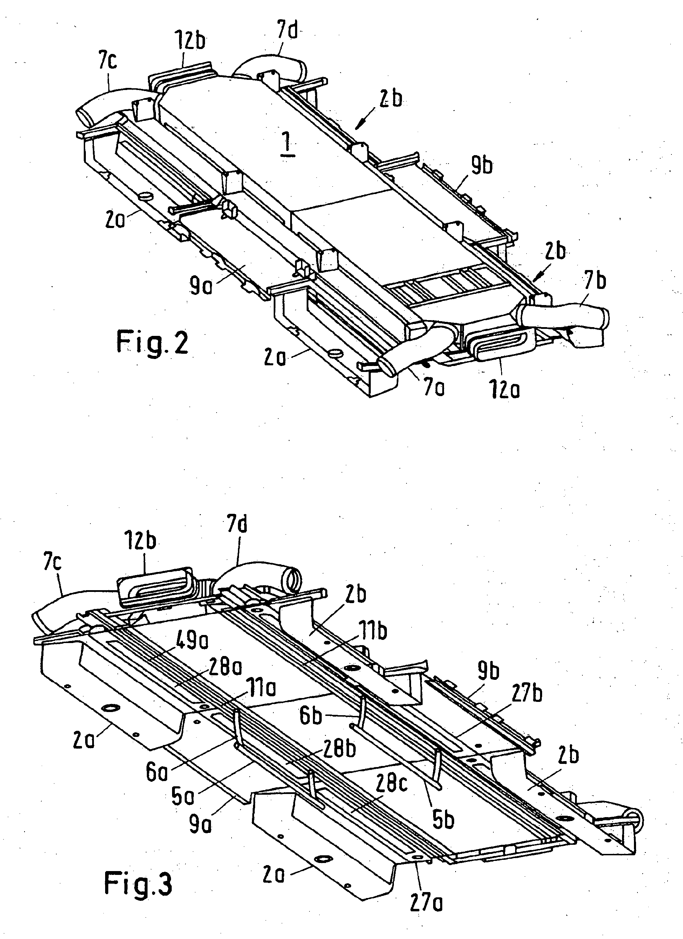

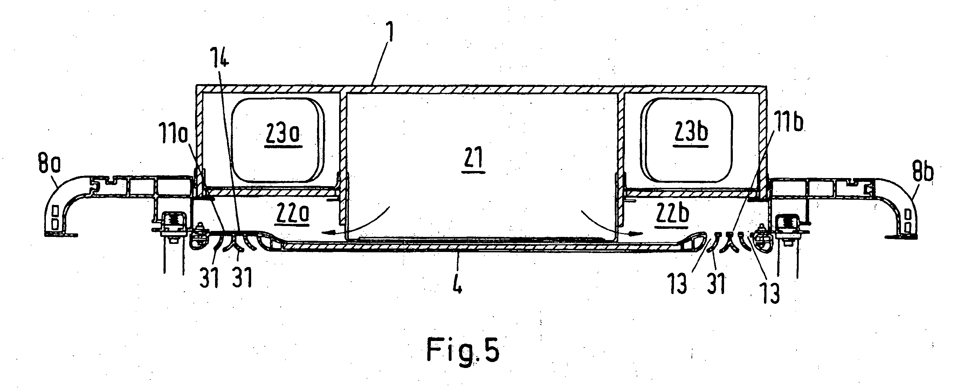

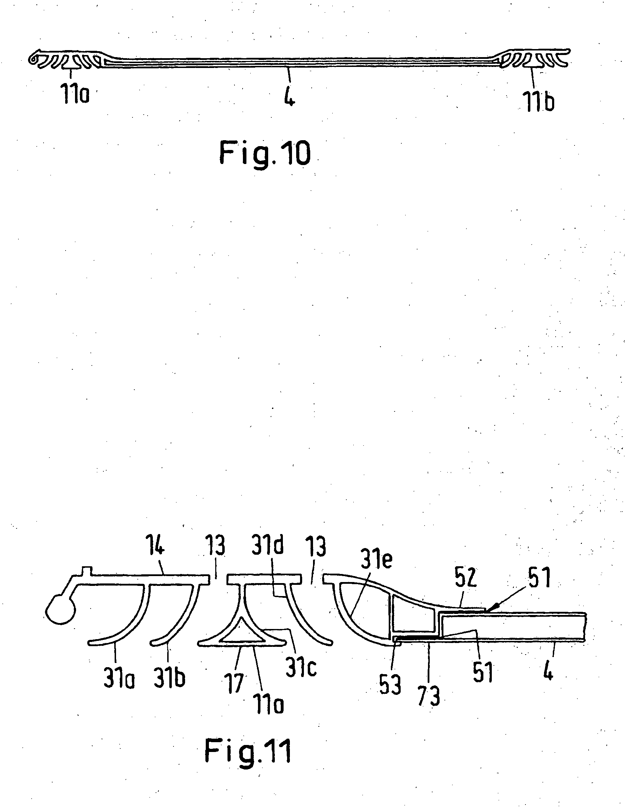

Fig. 1 zeigt eine perspektivische Darstellung einer Anordnung mit einem Kanalmodul 1, das unten von einem Deckelement 4 abgedeckt ist. Weitere Darstellungen der Anordnung sind in den Fig. 2 und 11 zu sehen, wobei insbesondere die Fig. 5 bis 11 lediglich Details der Anordnung darstellen und wobei in allen Figuren Teile der Anordnung weggelassen sind, um den Blick auf andere Teile freizugeben. Zum Beispiel sind die seitlichen Voutenelemente 2, die aus den Fig. 2 bis 4 erkennbar sind, nicht in Fig. 1 dargestellt. Ferner ist in Fig. 1 ein Teil der Bauteile nicht dargestellt, die an der tragenden Konstruktion befestigt sind.

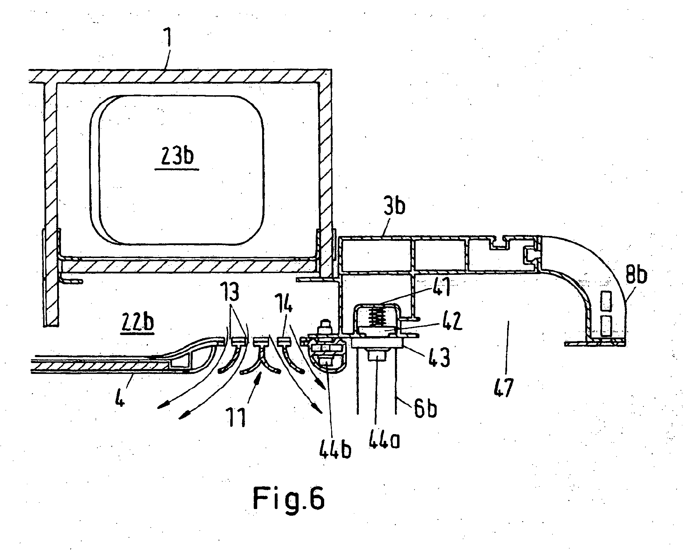

Die tragende Konstruktion ist in dem Ausführungsbeispiel durch zwei in Längsrichtung des Fahrzeugs verlaufende langgestreckte Profile 3a, 3b realisiert, die sich seitlich, auf beiden einander gegenüberliegenden Seiten des Kanalmoduls erstrecken. Die Profile 3 sind vorzugsweise Aluminium-Strangpressprofile mit mehreren Kammern zur Stabilisierung der Profile. Die Kammern sind aus der Schnittdarstellung der Fig. 6 erkennbar. Von den daran befestigten Teilen sind in Fig.1 die tragenden, stangenartig ausgebildeten Teile 6a, 6b der Haltestangen 5a, 5b dargestellt. Die tragenden Teile 6 erstrecken sich mit ihrer Längsrichtung von oben nach unten und stützen die waagerecht verlaufenden Haltestangen 5a, 5b. Dabei ist die Konstruktion aufgrund der Profile 3a, 3b, die unmittelbar oben am Wagenkasten (nicht dargestellt) befestigt werden können, so stabil, dass die Haltestangen nicht am Boden des Fahrzeugs abgestützt werden müssen.

Fig. 1 lässt auch erkennen, dass an den tragenden Profilen 3a, 3b seitlich Befestigungselemente 8a, 8b befestigt sind, die einen gekrümmten Verlauf nach unten nehmen und in einer Befestigungsplatte enden. Diese Befestigungsplatte bildet einen Flansch für die Befestigung der in Fig. 1 nicht dargestellten Voutenelemente 2a, 2b und für die Befestigung der in Längsrichtung zwischen den Voutenelementen 2 angeordneten Anschlussteile 9a, 9b für den Anschluss der Anordnung an Türkonstruktionen. Diese in Fig. 2 und Fig. 3 dargestellten Voutenelemente 2 und Anschlusselemente 9 können individuell an die Gegebenheiten in einem bestimmten Fahrzeugtyp angepasst werden. Insbesondere kann ihre Breite angepasst werden. Auf diese Weise kann der zentrale Teil der Anordnung immer in gleicher Weise ausgeführt werden, unabhängig von der Breite des Fahrzeugs.

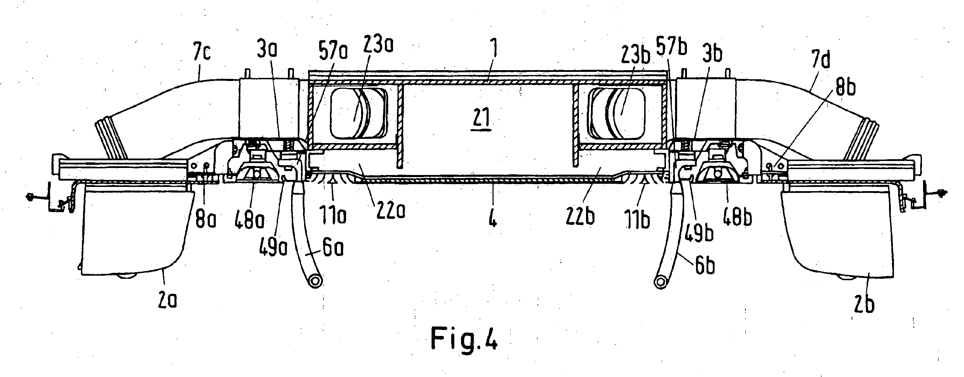

Weitere Teile, die an der tragenden Konstruktion, nämlich an den Profilen 3, befestigt werden, sind aus Fig. 4 erkennbar. Insbesondere sind seitlich außerhalb der Bereiche, in denen die tragenden Teile 6 der Haltestangen 5 an den Profilen 3 befestigt sind, Leuchten 48a, 48b erkennbar. Dabei deckt eine Blende neben der Lichtaustrittsöffnung der Leuchte 48 den Bereich nach unten ab, in dem das jeweilige tragende Teil 6 mit dem Halteprofil 3 verbunden ist. In der konkreten Ausgestaltung (siehe zum Beispiel Fig. 4) weist der tragende Teil 6 zum Beispiel ein abgewinkeltes Endstück 57 auf, das sich durch einen Schlitz in der Blende 49 oder durch einen schmalen Abstand zwischen der Blende 49 und dem Luftleitprofil 11 erstreckt.

Die Blende der Leuchten ist in Fig. 3 im Bereich links der zentralen Mittelachse der Anordnung erkennbar und mit dem Bezugszeichen 27a bezeichnet. Sie weist in dem Ausführungsbeispiel drei schlitzartige, in Längsrichtung hintereinander angeordnete Aussparungen 28a, 28b, 28c für die Leuchten 48 auf. Die in Fig. 4 mit den Bezugszeichen 49a bzw. 49b bezeichnete Blende ist daher zum Beispiel ein Randbereich der Blende 27a neben Aussparung 28.

Die Befestigung des tragenden Teils 6 (siehe Fig. 6) an dem Halteprofil ist durch eine Verschraubung realisiert, wobei eine Schraube 44a durch den Endbereich 43 des tragenden Teils 6b hindurch in ein C-profilförmiges Teil 41 des tragenden Profils 3b hineinragt. Das C-Profil 41 ist nach unten offen und weist an seiner Öffnung gegenüberliegende Ränder auf, die den Querschnitt des C-Profils verringern. In das C-Profil 41 ist eine Schraubenmutter eingesetzt, die lediglich an den in Längsrichtung gegenüberliegenden Enden des C-Profils 41 aus diesem entfernt werden kann oder in dieses eingesetzt werden kann. Im mittleren Bereich des C-Profils 41 kann die Mutter 42 nicht nach unten aus dem C-Profil 41 herausfallen oder entnommen werden. Durch Anziehen der Schraube 44a entsteht eine Anspresskraft des Endbereichs 43 des tragenden Teils 6b gegen die Mutter 42, so dass das tragende Teil 6b an dem C-Profil 41 befestigt wird. Durch Lösen der Schraube 44a kann die Befestigungsverbindung so gelockert werden, dass die Schraube 44a, der Endbereich 43 und die Mutter 42 in Längsrichtung des C-Profils 41 verschoben werden können und an einer anderen Stelle durch Anziehen der Schraube 44a befestigt werden können.

Fig. 1, 5 sowie 6 zeigen eine andere Variante der tragenden Teile 6 der Haltestange 5 als Fig. 3 und 4. In Fig. 3 und 4 sind die tragenden Teile in ihrem Verlauf von oben nach unten leicht einwärts Richtung der Mittelachse des Fahrzeugs gekrümmt, wohingegen die tragenden Teile 6 in Fig. 1, 5 und 6 gerade nach unten verlaufen. Auch weisen die tragenden Teile 6 in Fig. 1, 5 und 6 keine Abwinkelung an ihrem oberen Ende auf, wo sie mit dem tragenden Profil 3 verbunden sind.

Fig. 1 lässt an den einander gegenüberliegenden Längsrändern des Deckelements 4 jeweils ein Luftleitprofil 11a, 11b erkennen. An dem links in Fig. 1 dargestellten Luftleitprofil 11a ist auch eine Vielzahl von sich in Längsrichtung erstreckenden Schlitzen 13 erkennbar. Weitere Schlitze können wegen der Blickrichtung in Fig. 1 nicht erkannt werden. Besser ist die Gestaltung der Luftleitprofile 11 aus Fig. 4, 5, 6 und 11 erkennbar. Diese Querschnittsdarstellungen in den Fig. 4, 5, 6 und 11 zeigen, dass die Luftleitprofile oben einen plattenförmigen, sich in horizontaler Richtung erstreckenden Bereich 14 aufweisen, in dem die Schlitze 13 ausgebildet sind. Von dem plattenförmigen Bereich 14 nach unten erstrecken sich Luftleitfortsätze 31a, 31b, 31c, 31d, 31e (Fig. 11), die in Längsrichtung (senkrecht zur Ebene der Fig. 11) über die gesamte Längserstreckung des Luftleitprofils 11 verlaufen. Dabei sind die beiden linken Luftleitfortsätze 31a, 31b so gekrümmt, dass die von oben durch die Schlitze 13 austretende Luft in Richtung Mitte des Wagenkastens nach unten geleitet wird. Dagegen sind die beiden äußeren Luftleitfortsätze 31d, 31e so gekrümmt, dass die von oben durch die Schlitze 13 austretende Luft nach unten außen des Wagenkastens geleitet wird. Der mittlere Luftleitfortsatz 31c ist V-förmig mit gekrümmten Schenkeln ausgebildet, wobei an manchen Stellen die beiden unten liegenden freien Enden der Schenkel des V miteinander durch eine Stabilisierung 17 verbunden sind (z.B. Fig. 11).

Fig. 6 zeigt dagegen einen Längsabschnitt des Luftleitprofils 11, der keine solche Verbindung 17 aufweist. In Fig. 6 sind die Strömungsrichtungen der durch die Schlitze 13 austretenden Luft durch Pfeile angedeutet.

Aus Fig. 1 sind Luftanschlüsse 7, 12 an die einzelnen Kanäle 21, 23 des Kanalmoduls 1 erkennbar. Wie am Besten aus Fig. 4 und 5 erkennbar ist, weist das Kanalmodul 1 einen zentralen, sich in Längsrichtung (senkrecht zur Figurenebene in Fig. 4 und 5) erstreckenden Zuluftkanal 21 auf, durch den je nach Bedarf Warmluft und/oder Kaltluft geführt werden kann, um den Fahrgastraum unter dem Kanalmodul 1 zu belüften. Die Warmluft oder Kaltluft wird zum Beispiel von einer an sich bekannten Heizungsanlage und/oder Klimaanlage bereitgestellt. Die Klimaanlage ist zum Beispiel über den vorne in Fig. 1 dargestellten Anschluss 12a an den Zuluftkanal 21 angeschlossen. Der Anschluss 12a kann aber auch dazu dienen, das Kanalmodul mit weiteren Kanalmodulen in anderen Teilen des Fahrzeugs zu verbinden.

Die Anschlüsse 7a, 7b, 7c, 7d in Fig. 1, 2 und 3 dienen dem Anschluss der beiden seitlich, auf gegenüberliegenden Seiten des Zuluftkanals 21 in dem Kanalmodul 1 ausgeformten Abluftkanälen 23a, 23b. Der Anschlussbereich im hinteren Teil der Fig. 1 ist auch aus der Schnittdarstellung der Fig. 4 erkennbar. Die Anschlüsse 7 werden (nicht dargestellt) mit weiteren Anschlussleitungen verbunden, die sich vorzugsweise von unten nach oben durch den Fahrgastraum oder am Rand des Fahrgastraums erstrecken und an Lufteintrittsöffnungen im Bereich des Bodens des Fahrgastraums beginnen. Durch diese Lufteintrittsöffnungen tritt die Abluft aus dem Fahrgastraum in die Leitungen ein und wird über die Anschlussstücke 7 in die Abluftkanäle 23a, 23b eingeleitet, durch die die Abluft zu der Heizungs- und/oder Klimaanlage und/oder ins Freie geführt wird. Um die Abluft abzusaugen, ist vorzugsweise an anderer Stelle als der in Fig. 1 bis Fig. 11 gezeigten Anordnung ein entsprechender Ventilator oder mehrere Ventilatoren angeordnet.

Die Schnittdarstellung der Fig. 4, 5 und 6 zeigt, außer dem Zuluftkanal 21 und den Abluftkanälen 23a, 23b, auch seitlich des Zuluftkanals 21 und unterhalb der Abluftkanäle 23a, 23b ausgebildete Beruhigungsräume 22a, 22b, die sich ebenfalls in Längsrichtung des Fahrzeugs bzw. der Anordnung erstrecken. Dabei müssen die Beruhigungsräume jedoch in Längsrichtung nicht über die gesamte Länge der in Fig. 1 bis 3 dargestellten Anordnung verlaufen. Vorzugsweise befinden sich derartige Beruhigungsräume 22a, 22b aber überall dort, wo in den Luftleitprofilen 11 Luftaustrittsöffnungen 13 angeordnet sind.

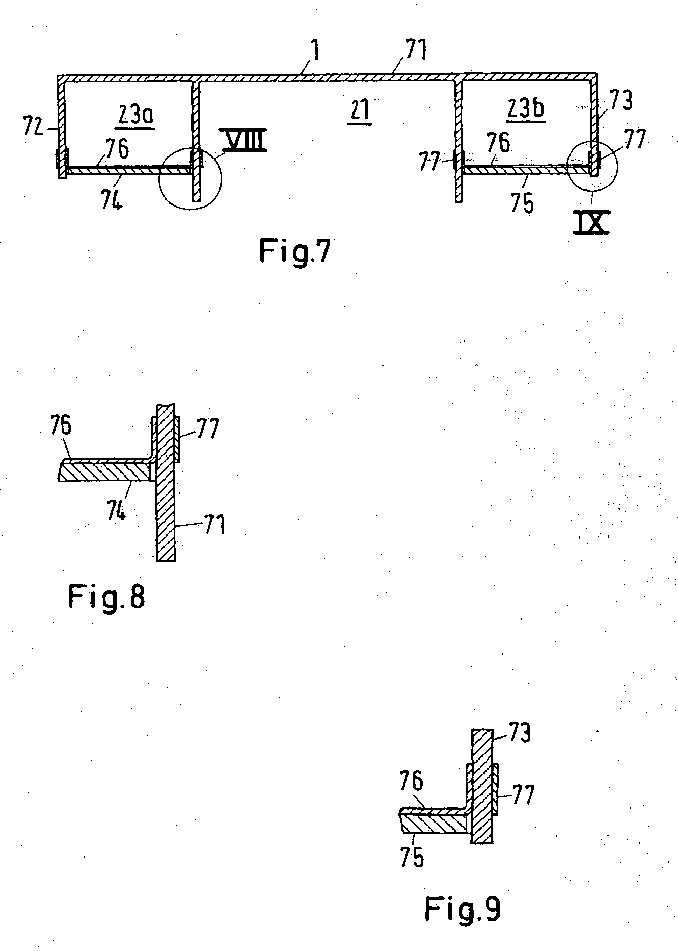

Die Beruhigungsräume 22a, 22b werden lediglich teilweise durch Wandelemente des Kanalmoduls 1 gebildet. Lediglich die in Fig. 7 dargestellten unteren Wandelemente 74, 75 und die unteren Enden des U-förmigen zentralen Teils 71 des Kanalmoduls 1 begrenzen die Beruhigungsräume 22a, 22b. Nach unten werden die Beruhigungsräume 22a, 22b (siehe Fig. 4 und 5) durch die seitlichen Randbereiche des Deckelements 4 sowie durch die Luftleitprofile 11 umrandet. Seitlich nach außen begrenzen die tragenden Profile 3a, 3b (siehe beispielsweise Fig. 6) den jeweiligen Beruhigungsraum 22. Daher wird durch Abnehmen des Deckelements 4 mit den daran befestigten Luftleitprofilen 11a, 11b nicht nur der zentrale Zuluftkanal 21 zugänglich, sondern auch die beiden Beruhigungsräume 22a, 22b. Aus diesem Grund können insbesondere die für die Zuluft benutzten Bereiche gewartet und insbesondere gereinigt werden.

Fig. 7 zeigt das Kanalmodul 1 ohne Deckelement 4. In der speziellen Ausführungsform weist das Kanalmodul 1 einen zentralen, U-förmigen Mittelteil 71 auf, der den zentralen Zuluftkanal 21 oben und auf den gegenüberliegenden Seiten begrenzt. Dabei begrenzen die beiden Schenkel des U-förmigen zentralen Teils 71 auch die seitlich des Zuluftkanals 21 angeordneten Abluftkanäle 23a, 23b. Außerdem weist das Kanalmodul 1 lediglich noch zwei weitere Wandelemente auf, nämlich die bereits erwähnten unteren Wandelemente 74, 75 zur Begrenzung der seitlichen Abluftkanäle 23a, 23b. Alle in Fig. 7 dargestellten Wandelemente erstrecken sich über die gesamte Längserstreckung des Kanalmoduls 1 in Richtung senkrecht zu der Figurenebene von Fig. 7. Diese Wandelemente sind vorzugsweise aus dem oben vor der Figurenbeschreibung beschriebenen Material mit HPL-Deckschichten und einem geschäumten, faserverstärkten Kern.

Der Verbindungsbereich zwischen dem Wandelement 74 und dem Schenkel des U-förmigen zentralen Teils 71 ist durch einen Kreis mit dem Bezugszeichen VIII eingerahmt. Dieser eingerahmte Bereich ist vergrößert in Fig. 8 dargestellt. Dort ist erkennbar, dass ein Winkelprofil 76 innenseitig in dem Abluftkanal 23a angeordnet ist, wobei sich das Winkelprofil 76 vorzugsweise über die gesamte Breite des Wandelements 74 erstreckt und U-förmig ausgestaltet ist, wobei die beiden kurzen Schenkel des U sich parallel zu dem Schenkel des zentralen Teils 71 bzw. parallel zu dem seitlichen Teil des Elements 72 erstrecken. Vorzugsweise ist das Winkelstück 76 vollflächig an die Wandelemente 71, 74, 72 angeklebt. Zur Verstärkung der Verbindung zwischen dem Wandelement 71 und dem Wandelement 74 kann dem Schenkel des Winkelstücks 76 gegenüberliegend, auf der Seite des Zuluftkanals 71, ein Verstärkungselement 77, vorzugsweise durch eine Klebeverbindung, mit dem Schenkel des Wandelements 71 verbunden sein (Fig. 8).

Fig. 9 vergrößert den in dem mit IX bezeichneten kreisförmigen Bereich in Fig. 7. Dort erkennt man für das Winkelprofil 76 in dem rechten Abluftkanal 23b, dass der kurze Schenkel sich entlang dem Seitenteil des Wandelements 73, und zwar innenseitig des Abluftkanals 23b, erstreckt. Die Winkelstücke 76 in den beiden Abluftkanälen 23a, 23b sind in gleicher Weise gestaltet und in gleicher Weise mit den jeweiligen Wandelementen 70-75 verbunden. Wie Fig. 9 zeigt, kann auch außenseitig des Seitenteils des Wandelements 73 ein Verstärkungsbereich 77 vorgesehen sein.

Fig. 10 zeigt das Deckelemerit 4 mit den an seinen seitlichen Rändern befestigten Luftleitprofilen 11a, 11b. Für den linken Teil der Fig. 10 zeigt Fig. 11 vergrößert das Luftleitprofil 11a und den Übergangsbereich am Seitenrand des Deckelements 4. Das Luftleitprofil 11a weist in dem Übergangsbereich zu dem Element 4 ein stufenförmiges Profil auf, das in Richtung Mitte des Deckelements 4 (rechts in Fig. 11) einen vorspringenden Bereich 52 aufweist. Gegen die untere Oberfläche dieses vorspringenden Bereichs 52 ist der Endbereich des Deckelements 4 in Anlage gebracht und über eine Klebstoffschicht 51 damit klebend verbunden.

An der Unterseite des Deckelements 4 ist die Deckschicht 73, die z.B. aus HPL (Hochdruck-Laminat) besteht, seitlich über den Kernbereich des Deckelements 4 hinaus nach links in Fig. 11 verlängert. Die Deckschicht 73 liegt dort mit ihrer Oberseite an dem Luftleitprofil 11 an und ist dort über eine Klebstoffschicht 51 mit dem Luftleitprofil 11 verbunden. Dabei greift das freie Ende der Deckschicht 73 in eine U-förmige Aufnahme des Luftleitprofils 11 ein. Auf diese Weise ist gewährleistet, dass die einzelnen Schichten der Deckschicht 73 nicht de-laminieren.

## Patentansprüche

1. Anordnung zur Befestigung an einer Wagenkasten-Decke eines Großraum-Fahrzeuges zur Personenbeförderung, insbesondere eines Schienenfahrzeuges, wobei die Anordnung aufweist:
- eine Deckenverkleidung
- eine tragende Konstruktion (3a, 3b), die Teil der Wagenkasten-Decke ist oder an der Wagenkasten-Decke befestigt ist und an der die Deckenverkleidung aufgehängt ist,
wobei die Deckenverkleidung aufweist:
a) ein Kanalmodul (1), das einen in Längsrichtung des Wagenkastens verlaufenden Zuluftkanal (21) für eine Zuführung von Luft in das innere des Wagenkastens bildet,
b) ein plattenförmiges Deckelement (4), das den Zuluftkanal (21) unten abdeckt und auf seiner Unterseite eine vom Fahrgastraum sichtbare Oberfläche der Deckenverkleidung bildet, wobei das Deckelement (4) von dem Kanalmodul (1) abnehmbar ist,
**dadurch gekennzeichnet, dass**
das Kanalmodul (1) und/oder das Deckelement (4) aus zumindest einem Formteil mit faserverstärkten und geschäumten Duroplasten gefertigt ist/sind und das Deckelement (4) eine Deckschicht aus unter Hochdruck laminierten Verbundmaterialien aufweist.

2. Anordnung nach Anspruch 1, wobei das Deckelement (4) aus zumindest einem Formteil mit faserverstärkten und geschäumten Duroplasten gefertigt ist und an ihrer. Unterseite, die die Ansichtsfläche für den Fahrgastraum bildet, eine Deckschicht aus unter Hochdruck laminierten Verbundmaterialien aufweist.

3. Anordnung nach Anspruch 1 oder 2, wobei in dem Kanalmodul (1) seitlich des Zuluftkanals (21) zumindest ein sich in der Längsrichtung des Wagenkastens erstreckender Beruhigungsraum (22a, 22b) ausgestaltet ist, der eintrittsseitig mit dem Zuluftkanal (21) und austrittsseitig über Austrittsöffnungen (13) mit dem Fahrgastraum verbunden ist, sodass Luft aus dem Zuluftkanal (21) durch den Beruhigungsraum (22) und durch die Austrittsöffnungen (13) in den Fahrgastraum strömen kann.

4. Anordnung nach einem der Ansprüche 1 bis 3, wobei sich zumindest ein Teil der tragenden Konstruktion (3) seitlich des Kanalmoduls (1) erstreckt und dort Befestigungseinrichtungen (41) zum Befestigen von weiteren Bauteilen (6) des Fahrzeuges aufweist.

5. Anordnung nach Anspruch 4, wobei eine der Befestigungseinrichtungen (41) zur Befestigung von Haltestangen (5) und/oder Haltegriffen ausgestaltet ist, an der/denen sich Fahrgäste innerhalb des Fahrgastraumes festhalten können.

6. Anordnung nach Anspruch 5, wobei sich die Befestigungseinrichtung (41) zur Befestigung von Haltestangen (5) und/oder Haltegriffen nach unten durch eine Blende (27a) abgedeckt ist, die eine Durchtrittsöffnung für ein tragendes Teil (6) der Haltestange (5) und/oder des Haltegriffs aufweist.

7. Anordnung nach einem der vorhergehenden Ansprüche, wobei die Austrittsöffnungen (13) zum Austreten der Luft aus dem Zuluftkanal (21) in den Fahrgastraum in zumindest einem lang gestreckten Profil (11a, 11b), das sich seitlich des Kanalmoduls (1) in Längsrichtung des Fahrzeuges erstreckt, ausgeformt sind.

8. Anordnung nach Anspruch 7, wobei das Deckelement (4) fest mit dem lang gestreckten Profil (11) verbunden ist, das lösbar mit der tragenden Konstruktion (3) verbunden ist, sodass das Deckelement (4) gemeinsam mit dem lang gestreckten. Profil (11) von dem Kanalmodul (1) abnehmbar ist.

9. Anordnung nach einem der vorhergehenden Ansprüche, wobei die Anordnung ein Voutenelement (2a, 2b) zur Verkleidung eines Übergangsbereichs von der Wagenkasten-Decke zu einer Wagenkasten-Seitenwand aufweist; das-seitlich des Kanalmoduls (1) angeordnet ist.

10. Anordnung nach Anspruch 9, wobei das Kanalmodul (1) bei gleicher Breite - betrachtet in einer Richtung senkrecht zur Längsrichtung des Fahrzeugs - für eine Mehrzahl unterschiedlicher Fahrzeugtypen verwendbar ist und die Breite des Voutenelements (2a, 2b) abhängig von der Breite des Fahrzeugtyps gewählt ist.

11. Anordnung nach einem der vorhergehenden Ansprüche, wobei in dem Kanalmodul (1) seitlich des Zuluftkanals (21) und vorzugsweise oberhalb des Beruhigungsraumes (22) zumindest ein Abluftkanal (23) gebildet ist, durch den Abluft von dem Fahrgastraum abgeleitet werden kann.

12. Anordnung nach einem der vorhergehenden Ansprüche, wobei das Kanalmodul (1) und/oder das Deckelement (4) jeweils aus zumindest einem Formteil (71 - 75) mit faserverstärkten und geschäumten Duroplasten gefertigt ist.

13. Anordnung nach dem vorhergehenden Anspruch, wobei die Fasermaterialien aus der folgenden Gruppe von Materialien ausgewählt sind: Glasfasern; mesoskalige Karbonfasem, nanoskalige zylindrische Grafitfasem und beliebige Kombinationen davon ausgewählt sind.

14. Anordnung nach einem der vorhergehenden Ansprüche, wobei das Deckelement (4) eine untere Deckschicht (73) aus unter Hochdruck laminierten Verbundmaterialien aufweist.

15. Verfahren zur Herstellung einer Anordnung zur Befestigung an einer Wagenkasten-Decke eines Großraum-Fahrzeuges zur Personenbeförderung, insbesondere eines Schienenfahrzeuges, insbesondere zur Herstellung der Anordnung nach einem der vorhergehenden Ansprüche, folgendes bereitgestellt wird:
- eine Deckenverkleidung
- eine tragende Konstruktion (3a, 3b), als Teil der Wagenkasten-Decke oder die an der Wagenkasten-Decke befestigt wird, wobei die Deckenverkleidung an der tragenden Konstruktion (3) aufgehängt wird,
wobei die Deckenverkleidung derart ausgestaltet wird, dass
a) sie ein Kanalmodul (1) aufweist, das einen in Längsrichtung des Wagenkastens verlaufenden Zuluftkanal (21) für eine Zuführung von Luft in das Innere des Wagenkastens bildet, und
b) sie ein plattenförmiges Deckelement (4) aufweist, das den Zuluftkanal (21) unten abdeckt und auf seiner Unterseite eine vom Fahrgastraum sichtbare Oberfläche der Deckenverkleidung bildet, wobei das Deckelement (4) von dem Kanalmodul (1) abnehmbar ist.
**dadurch gekennzeichnet, dass**
als das Kanalmodul (1) und/oder das Deckelement (4) zumindest ein Formteil mit faserverstärkten und geschäumten Duroplasten verwendet wird/werden und als das Deckelement (4) ein solches Deckelement verwendet wird, das eine Deckschicht aus unter Hochdruck laminierten Verbundmaterialien aufweist.

## Claims

1. Arrangement for fastening at a car body ceiling of an open-plan vehicle for passenger transport, in particular of a railway vehicle, the arrangement comprising:
- A ceiling lining;
- a load-bearing structure (3a, 3b) which is part of the car body ceiling or is fastened to the car body ceiling and from which the ceiling lining is suspended;
the ceiling lining having
a) a duct module (1) forming a supply air duct (21), extending in longitudinal direction of the car body, for a supply of air into the inside of the car body;
b) a slab-shaped covering element (4) covering the supply air duct (21) from below and, at its underside, forming a surface of the ceiling lining visible from the passenger compartment, the covering element (4) being detachable from the duct module (1),
**characterised in that**
the duct module (1) and/or the covering element (4) is/are made of at least one moulded part with fibre-reinforced and foamed thermosets and the covering element (4) has a cover layer made of composite materials laminated under high pressure.

2. Arrangement according to Claim 1, wherein the covering element (4) is made of at least one moulded part with fibre-reinforced and foamed thermosets and, at its underside, which forms the visible surface for the passenger compartment, has a cover layer made of composite materials laminated under high pressure.

3. Arrangement according to Claim 1 or Claim 2, wherein at least one settling chamber (22a, 22b) extending in the longitudinal direction of the car body is provided in the duct module (1) sideways of the supply air duct (21), the settling chamber (22a, 22b) being connected to the supply air duct (21) at the imput and, via outlet openings (13), to the passenger compartment at the outlet, so that air from the supply air duct (21) can flow into the passenger compartment through the settling chamber (22a, 22b) and through the outlet openings (13).

4. Arrangement according to one of the Claims 1 to 3, wherein at least a part of the load-bearing structure (3) extends sideways of the duct module (1) and there comprises fastening devices (41) for fastening further components (6) of the vehicle.

5. Arrangement according to Claim 4, wherein one of the fastening devices (41) is designed for the fastening of handrails (5) and/or grab handles which passengers can hold on to inside the passenger compartment.

6. Arrangement according to Claim 5, wherein the fastening device (41) for the fastening of handrails (5) and/or grab handles is covered from below by a cover (27a) having an opening for a load-bearing part (6) of the handrail (5) and/or the grab handles.

7. Arrangement according to one of the preceding Claims, wherein the outlet openings (13) for exit of the air from the supply air duct (21) into the passenger compartment are formed in at least one elongated profile (11 a, 11 b) extending sideways of the duct module (1) in longitudinal direction of the vehicle.

8. Arrangement according to Claim 7, wherein the covering element (4) is fixedly connected to the elongated profile (11) which is detachably connected to the load-bearing structure (3), so that the covering element (4) can be detached from the duct module (1) together with the elongated profile (11).

9. Arrangement according to one of the preceding Claims, wherein the arrangement comprises a fillet element (2a, 2b), arranged sideways of the duct module (1), for covering a transition area from the car body ceiling to a car body side wall.

10. Arrangement according to Claim 9, wherein the duct module (1), its width remaining constant - looked at in a direction perpendicular to the longitudinal direction of the vehicle - can be used for a plurality of different vehicle types and the width of the fillet element (2a, 2b) is chosen in dependence on the width of the vehicle type.

11. Arrangement according to one of the preceding Claims, wherein at least one exhaust air duct (23), through which exhaust air can be discharged from the passenger compartment, is provided in the duct module (1) sideways of the supply air duct (21) and, preferably, above the settling chamber (22).

12. Arrangement according to one of the preceding Claims, wherein the duct module (1) and/or the covering element (4) are each made of at least one moulded part (71-75) with fibre-reinforced and foamed thermosets.

13. Arrangement according to the preceding Claim, wherein the fibre materials are chosen from the following group of materials: glass fibres, mesoscale carbon fibres, nanoscale cylindrical carbon fibres, and any combination thereof.

14. Arrangement according to one of the preceding Claims, wherein the covering element (4), comprises a lower cover layer (73) made of composite materials laminated under high pressure.

15. Method for manufacturing an arrangement for fastening at a car body ceiling of an open-plan vehicle for passenger transport, in particular of a railway vehicle, in particular for manufacturing the arrangement according to one of the preceding Claims, wherein the following is provided:
- a ceiling lining;
- a load-bearing structure (3a, 3b), as part of the car body ceiling, or which is fastened to the car body ceiling, wherein the ceiling lining is suspended from the load-bearing structure (3);
wherein the ceiling lining is designed in such a way that
a) it comprises a duct module (1) forming a supply air duct (21), extending in longitudinal direction of the car body, for a supply of air into the inside of the car body; and
b) it comprises a slab-shaped covering element (4) covering the supply air duct (21) from below and, at its underside, forming a surface of the ceiling lining visible from the passenger compartment, the ceiling element (4) being detachable from the duct module (1),
**characterised by** the fact that
as the duct module (1) and/or as the covering element (4) at least one moulded part with fibre-reinforced and foamed thermosets is/are used, and as the covering element (4) a covering element is used which has a cover layer made of composite materials laminated under high pressure.

## Revendications

1. Ensemble destiné à être fixé au niveau d'un plafond de caisse d'un véhicule de grand gabarit destiné au transport de personnes, en particulier d'un véhicule ferroviaire, sachant que l'ensemble présente :
- un habillage de plafond,
- une structure porteuse (3a, 3b), qui fait partie intégrante du plafond de caisse ou qui est fixée au niveau du plafond de caisse et au niveau de laquelle l'habillage de plafond est accroché,
sachant que l'habillage de plafond présente :
a) un module de conduit (1), qui forme un conduit d'air entrant (21) s'étendant dans le sens longitudinal de la caisse, destiné à une arrivée d'air dans l'intérieur de la caisse,
b) un élément de recouvrement (4) en forme de panneau, qui recouvre le conduit d'air entrant (21) en bas et qui forme, sur son côté inférieur, une surface, visible depuis l'habitacle, de l'habillage de plafond, sachant que l'élément de recouvrement (4) peut être retiré du module de conduit (1),
**caractérisé en ce**
**que** le module de conduit (1) et/ou l'élément de recouvrement (4) sont fabriqués à partir au moins d'une pièce moulée comprenant des matières thermodurcissables renforcées par des fibres et expansées, et en ce que l'élément de recouvrement (4) présente une couche de recouvrement constituée de matériaux composites laminés sous haute pression.

2. Ensemble selon la revendication 1, sachant que l'élément de recouvrement (4) est fabriqué à partir au moins d'une pièce moulée comprenant des matières thermodurcissables renforcées par des fibres et expansées et qu'il présente, au niveau de son côté inférieur qui forme la face visible pour l'habitacle, une couche de recouvrement constituée de matériaux composites laminés sous haute pression.

3. Ensemble selon la revendication 1 ou 2, sachant qu'au moins un espace de stabilisation (22a, 22b) s'étendant dans le sens longitudinal de la caisse est configuré dans le module de conduit (1) sur le côté du conduit d'air entrant (21), lequel espace de stabilisation est relié, côté entrée, au conduit d'air entrant (21) et, côté sortie, par l'intermédiaire d'ouvertures de sortie (13), à l'habitacle de sorte que l'air peut circuler depuis le conduit d'air entrant (21), en passant par l'espace de stabilisation (22) et par les ouvertures de sortie (13), dans l'habitacle.

4. Ensemble selon l'une quelconque des revendications 1 à 3, sachant qu'au moins une partie de la structure porteuse (3) s'étend sur le côté du module de conduit (1) et qu'elle présente à cet endroit des dispositifs de fixation (41) servant à fixer d'autres composants (6) du véhicule.

5. Ensemble selon la revendication 4, sachant qu'un des dispositifs de fixation (41) est configuré afin de fixer des barres de maintien (5) et/ou des poignées de maintien, au niveau desquelles les passagers peuvent se tenir à l'intérieur de l'habitacle.

6. Ensemble selon la revendication 5, sachant que le dispositif de fixation (41) servant à fixer des barres de maintien (5) et/ou des poignées de maintien est recouvert vers le bas par un cache (27a), qui présente une ouverture de passage destinée à une pièce de support (6) de la barre de maintien (5) et/ou de la poignée de maintien.

7. Ensemble selon l'une quelconque des revendications précédentes, sachant que les ouvertures de sortie (13) servant à faire sortir l'air du conduit d'air entrant (21) dans l'habitacle sont formées dans au moins un profil (11a, 11b) s'étendant en longueur, lequel s'étend sur le côté du module de conduit (1) dans le sens longitudinal du véhicule.

8. Ensemble selon la revendication 7, sachant que l'élément de recouvrement (4) est relié de manière solidaire au profil (11) s'étendant en longueur, lequel est relié de manière amovible à la structure de support (3) de sorte que l'élément de recouvrement (4) peut être retiré du module de conduit (1) conjointement avec le profil (11) s'étendant en longueur.

9. Ensemble selon l'une quelconque des revendications précédentes, sachant que l'ensemble présente un élément voûté (2a, 2b) servant à habiller une zone de transition du plafond de caisse à une aile latérale de caisse, lequel élément voûté est disposé sur le côté du module de conduit (1).

10. Ensemble selon la revendication 9, sachant que le module de conduit (1) peut être utilisé pour une largeur identique - vu dans un sens perpendiculaire au sens longitudinal du véhicule - pour une multitude de types de véhicule différents et que la largeur de l'élément voûté (2a, 2b) est choisie en fonction de la largeur du type de véhicule.

11. Ensemble selon l'une quelconque des revendications précédentes, sachant qu'au moins un conduit d'air sortant (23) est formé dans le module de conduit (1), sur le côté du conduit d'air entrant (21) et de préférence au-dessus de l'espace de stabilisation (22), par lequel conduit d'air sortant l'air sortant peut être évacué de l'habitacle.

12. Ensemble selon l'une quelconque des revendications précédentes, sachant que le module de conduit (1) et/ou l'élément de recouvrement (4) sont fabriqués respectivement à partir au moins d'une pièce moulée (71 - 75) comprenant des matières thermodurcissables renforcées par des fibres et expansées.

13. Ensemble selon la revendication précédente, sachant que les matériaux à base de fibres sont choisis parmi le groupe de matériaux qui suit : les fibres de verre, les fibres de carbone de taille moyenne, des fibres de graphite cylindriques d'une taille à l'échelle du nanomètre et de combinaisons au choix de ces dernières.

14. Ensemble selon l'une quelconque des revendications précédentes, sachant que l'élément de recouvrement (4) présente une couche de recouvrement (73) inférieure constituée de matériaux composites laminés sous haute pression.

15. Procédé servant à fabriquer un ensemble destiné à être fixé au niveau d'un plafond de caisse d'un véhicule de grand gabarit servant au transport de personnes, en particulier d'un véhicule ferroviaire, en particulier servant à fabriquer l'ensemble selon l'une quelconque des revendications précédentes, sachant qu'est fourni ce qui suit :
- un habillage de plafond ;
- une structure de support (3a, 3b), qui fait partie intégrante du plafond de caisse ou qui est fixée au niveau du plafond de caisse, sachant que l'habillage de plafond est accroché au niveau de la structure de support (3),
sachant que l'habillage de plafond est configuré de telle manière
a) qu'il présente un module de conduit (1), qui forme un conduit d'air entrant (21) s'étendant dans le sens longitudinal de la caisse, destiné à l'arrivée d'air dans l'intérieur de la caisse, et
b) qu'il présente un élément de recouvrement (4) en forme de panneau, qui recouvre en bas le conduit d'air entrant (21) et qui forme, au niveau de son côté inférieur, une surface, visible depuis l'habitacle, de l'habillage de plafond, sachant que l'élément de recouvrement (4) peut être retiré du module de conduit (1),
**caractérisé en ce**
**qu'**au moins une pièce moulée comprenant des matières thermodurcissables renforcées par des fibres et expansées est utilisée en tant que module de conduit (1) et/ou qu'élément de recouvrement (4), et en ce qu'un élément de recouvrement de ce type est utilisé en tant qu'élément de recouvrement (4), lequel présente une couche de recouvrement constituée de matériaux composites laminés sous haute pression.
